Europäisches Patentamt

**European Patent Office**

Office européen des brevets

(19)

(11) Numéro de publication: **0 271 375 B1**

(12) **FASCICULE DE BREVET EUROPEEN**

(45) Date de publication de fascicule du brevet: **08.07.92**

(51) Int. Cl.5: **C09K 19/02**, G02F 1/09, G02F 1/13

(21) Numéro de dépôt: **87402500.0**

(22) Date de dépôt: **05.11.87**

(54) **Dispositifs optiques à cristal liquide lyotrope commandables thermiquement, électriquement ou magnétiquement.**

(30) Priorité: **07.11.86 FR 8615594**

(43) Date de publication de la demande:
**15.06.88 Bulletin 88/24**

(45) Mention de la délivrance du brevet:
**08.07.92 Bulletin 92/28**

(84) Etats contractants désignés:
**BE CH DE ES GB GR IT LI NL**

(56) Documents cités:
**FR-A- 2 462 725**

**C.R. SEANCES ACADEMIE DES SCIENCES, série II, vol. 292, no. 1, 5 janvier 1981, pages 45-48, Paris, FR; M. DVOLAITZKY et al.: "Sur l'existence de 'microémulsions biréfringentes'"**

**C.R. SEANCES ACADEMIE DES SCIENCES, série II, vol. 296, no. 6, pages 405-410, 14 février 1983, Paris, FR; J.-M. DI MEGLIO et al.: "Défauts et courbures de l'interface des 'microémulsions biréfringentes'"**

(73) Titulaire: **COMMISSARIAT A L'ENERGIE ATO-MIOUE Etablissement de Caractère Scientifique Technique et Industriel**
**31/33, rue de la Fédération**
**F-75015 Paris(FR)**

(72) Inventeur: **Tabony, James**
**4 Bis, Résidence du Parc Rue des Casseaux**
**F-91140 Villebon sur Yvette(FR)**

(74) Mandataire: **Mongrédien, André et al**
**c/o BREVATOME 25, rue de Ponthieu**
**F-75008 Paris(FR)**

Rank Xerox (UK) Business Services

CHEMICAL ABSTRACTS, vol. 101, no. 22, 26 novembre 1984, pages 410,411, résumé no. 198632c, Columbus, Ohio, US; S. FUKUSHIMA et al.: "Internal structure of oil-in-water emulsions stabilized with a cetostearyl alcohol", & YAKUGAKU ZASSHI 1984, 104(9), 986-9

MOL. CRYSTALS AND LIOUID CRYSTALS, vol. 36, 1976, pages 245-253, Gordon and Breach Science Publishers, Ltd, New York, US; C.F. HAYES: "Magnetic platelets in a nematic liquid crystal"

MOL. CRYSTALS AND LIOUID CRYSTALS, vol. 44, 1978, pages 227-236, Gordon and Breach Publishers, Ltd, New York, US; K. RADLEY et al.: "The structure of lyotropic nematic decylammoniumchloride and bromide systems by PMR of monomethyltin complexes and by microscopic studies"

**Description**

La présente invention a pour objet des dispositifs optiques à cristal liquide lyotrope commandables thermiquement, électriquement et/ou magnétiquement.

Elle s'applique en particulier dans le domaine de l'affichage aussi bien de caractères alpha-numériques que d'images plus complexes, dans le domaine agro-alimentaire pour la réalisation de serres, dans le domaine de l'habitat pour la réalisation des fenêtres, et dans le domaine des mémoires à bulles. Les dispositifs optiques selon l'invention peuvent aussi servir pour la réalisation de convertisseurs d'images, de commutateurs électro ou magnéto-optiques, de lentilles ou de verres de lunettes ou d'autres objets à transmission variable, etc.

Les dispositifs optiques de l'invention peuvent être utilisés dans toute la gamme de longueurs d'onde allant de l'infrarouge à l'ultraviolet, en passant par le visible.

Les cristaux liquides sont regroupés en deux classes principales, les cristaux liquides thermotropes et les cristaux liquides lyotropes.

Dans les cristaux liquides thermotropes, les différentes phases cristallines sont obtenues par chauffage ou refroidissement d'un composé moléculaire défini (p-n-pentylcyanobiphényle ou p-azoxyanisol par exemple) ou d'un mélange de composés qui présentent individuellement des propriétés de cristal liquide. Comme cristaux liquides thermotropes connus, on peut citer les nématiques, les smectiques et les cholestériques.

Les cristaux liquides lyotropes diffèrent des cristaux liquides thermotropes par le fait qu'ils sont constitués d'un mélange de composés qui ne présentent pas en eux-mêmes les propriétés de cristal liquide.

Les cristaux liquides lyotropes sont souvent constitués par un mélange d'eau et d'un tensio-actif. Dans de tels cristaux liquides les molécules tensio-actives s'agrègent et les agrégats s'organisent pour former un réseau cristallin.

Comme cristaux liquides lyotropes connus on peut citer des mésophases ayant des structures lamellaires, hexagonales, cubiques et nématiques. Souvent les cristaux liquides lyotropes contiennent une proportion en poids de tensio-actifs de plus de 50% du cristal liquide.

En outre leur viscosité est souvent élevée, ce qui rend leur orientation macroscopique difficile.

Les cristaux liquides lyotropes actuellement connus n'ont jamais été utilisés dans des dispositifs optiques, à l'inverse des cristaux liquides thermotropes.

La principale raison en est qu'ils contiennent une grande quantité d'eau, qu'ils présentent une conductivité électrique élevée et que l'application d'un champ électrique à ces cristaux liquides conduit à une électrolyse de l'eau alors que la commande électrique est la plus utilisée dans ces dispositifs.

Le problème dans les cristaux liquides thermotropes est de synthétiser des molécules qui présentent une mésophase désirée à structure cristal liquide, pour la température choisie de fonctionnement, et qui possèdent aussi des propriétés physiques appropriées pour l'orientation des molécules telles qu'une basse viscosité.

En outre, les cristaux liquides actuellement utilisés sont formés de composés relativement chers conférant aux dispositifs à base de ces cristaux liquides un prix onéreux.

L'invention a justement pour objet des dispositifs optiques à cristaux liquides bon marché. En outre, ces cristaux liquides sont des cristaux liquides lyotropes.

Il est connu du document C. R. Acad. Sc. Paris, t. 296 (1983) p.405-410 "Défauts et courbures de l'interface des microémulsions biréfringentes" de J M. di MEGLIO, des mélanges de cyclohexane (huile) d'eau, de SDS (tensioactif) et de pentanol-1 (cotensioactif) présentant des textures lamellaires classiques.

De façon plus précise, l'invention a pour objet un dispositif optique comportant un cristal liquide présentant deux états optiques stables, un état transparent et un état opaque, que l'on peut commander, caractérisé en ce que le cristal liquide a une structure lamellaire dans l'état transparent et une structure lamellaire nématique dans l'état opaque, ces deux états étant commandables thermiquement : la composition de ce cristal liquide est définie dans la revendication 1.

Ce dispositif optique peut être une serre, des fenêtres à utilisation industrielle ou domestique, des verres de lunettes ou bien un dispositif d'affichage de caractères alphanumériques ou point par point.

Une élévation de la température du dispositif ou inversement un abaissement de cette température, permet de passer de l'état transparent à l'état opaque et réciproquement. Les différences de température pour passer de l'état transparent à l'état opaque sont en particulier de 20 à 40°C.

L'état opaque correspond à un état où le cristal liquide est à la limite de la stabilité.

Dans ce dispositif, le liquide polaire peut constituer la phase dispersée et l'huile la phase continue. De même, l'huile peut constituer la phase dispersée et le liquide polaire la phase continue.

3

Entre la structure lamellaire, généralement obtenue à basse température, et la structure lamellaire nématique, généralement obtenue à plus haute température, les cristaux liquides ci-dessus présentent une structure comparable à celle des nématiques, les contituants des cristaux liquides étant regroupés en agrégats présentant une anisotropie magnétique et une anisotropie diélectrique.

L'invention a donc aussi pour objet un dispositif optique comportant un cristal liquide présentant deux états stables que l'on peut commander, caractérisé en ce que le cristal liquide est un nématique dans lequel les constituants forment des agrégats de forme allongée, dispersés dans une phase liquide continue, dont ta longueur est supérieure à la distance séparant deux agrégats consécutifs et dans lequel l'orientation de ces agrégats est commandable électriquement ou magnétiquement ; la composition des cristaux liquides commandables électriquement est donnée dans la revendication 4 et celle des cristaux liquides commandables magnétiquement est donnée dans la revendication 6.

Par commande magnétique il faut aussi comprendre une commande électromagnétique.

Ce dispositif est en particulier un dispositif d'affichage à caractère alpha-numérique ou matriciel.

Les cristaux liquides lyotropes de l'invention, avec de l'eau comme liquide polaire, peuvent être utilisés dans des dispositifs commandés électriquement à condition que l'eau constitue la phase dispersée tandis que l'huile constitue la phase continue. En effet, dans ce cas particulier, l'inventeur a trouvé que l'électrolyse de l'eau n'avait plus lieu.

Dans un dispositif optique, commandé magnétiquement, il est préférable que le cristal liquide lyotrope renferme des particules ferromagnétiques, ces dernières étant situées à l'intérieur des agrégats.

Les agrégats peuvent présenter la forme de plaques, de tiges, d'ellipsoïdes ou de cylindres allongés dont la longueur varie de 3 à plus de 300 nm.

Selon l'invention, la distance séparant deux agrégats consécutifs est comprise entre 7 et 200 nm. De préférence, cette distance varie de 10 à 30 nm.

L'introduction de particules ferromagnétiques dans les agrégats du cristal liquide lyotrope utilisable dans un dispositif selon l'invention permet d'augmenter la biréfringence optique, les anisotropes magnétiques et diélectriques, ce qui est très intéressant dans le domaine de l'affichage commandé électriquement ou magnétiquement.

Les particules ferromagnétiques peuvent être des particules de fer, de cobalt, de bioxyde de chrome, de nickel, d'oxyde ferrique, de magnétite, d'oxyde de cobalt. De préférence, les particules ferromagnétiques sont des particules de magnétite.

De façon avantageuse, le cristal liquide commandable électriquement ou magnétiquement contient :
- 5 à 20% en poids d'agent tensio-actif,
- 1 à 20% en poids d'agent co-tensio-actif,
- 50 à 93% en poids d'huile, et
- 1 à 44% en poids de liquide polaire.

Dans les dispositifs optiques selon l'invention commandables thermiquement, électriquement ou magnétiquement, le liquide polaire utilisé est de préférence de l'eau.

Toutefois, d'autres liquides polaires tels que l'ammoniac, l'éthylène glycol, le formamide, le glycérol, l'éthanol, un mélange de ces liquides polaires ou une solution aqueuse de ces liquides peuvent être envisagés.

Afin de faire varier les forces ioniques entre l'huile, le liquide polaire et l'agent tensio-actif, un électrolyte peut être ajouté au liquide polaire. Cet électrolyte représente 1 à 40% en poids du liquide polaire et de préférence 1 à 10% en poids.

Cet électrolyte est en particulier un sel inorganique tel qu'un sel de métaux alcalins comme le chlorure de sodium, le bromure de sodium, le sulfate de sodium, le chlorure de potassium, le bromure de potassium. Cet électrolyte peut aussi être un hydroxyde basique tel que l'hydroxyde d'ammonium. Enfin, il est aussi possible d'utiliser un sel organique tel que $N(CH_3)_4Br$ comme électrolyte.

Conformément à l'invention, tout type d'agents tensio-actifs peut être utilisé, que ces agents soient anioniques, cationiques ou non ioniques. Ces agents tensio-actifs sont en particulier des sels d'acide gras à longue chaîne hydrocarbonée ou fluorocarbonée, des sels d'amine à longue chaîne, des halogénures d'ammonium quaternaire ayant au moins un substituant hydrocarboné à longue chaîne, des alkyles sulfates ou sulfonates d'un métal alcalin, et des phospholipides. De préférence, la chaîne carbonée contient de 5 à 20 atomes de carbone. En outre, la chaîne carbonée peut être saturée ou insaturée.

Comme agent tensio-actif à chaîne carbonée saturée, on peut citer le dodécylsulfate de sodium et le bromure de tétradécyl triméthylammonium.

Comme agent tensio-actif à chaîne carbonée insaturée, on peut citer l'oléate de potassium.

Il est aussi possible d'utiliser des composés à chaîne multiple comme par exemple le bis(2-éthylhexyl)-sulfosuccinate de sodium connus sous l'abréviation A.O.T.

Il est aussi possible d'utiliser des savons du commerce et des huiles de pétrole sulfonées telles que l'hexylbenzosulfonate de sodium.

L'oléate de potassium, l'A.O.T. et les huiles de pétrole sulfonées sont de très bons agents tensio-actifs ayant l'avantage d'être produits industriellement en grande quantité à un très faible prix.

A l'exception de certains agents tensio-actifs, tels que l'A.O.T., qui jouent à la fois le rôle d'agent tensio-actif et d'agent co-tensio-actif, il est nécessaire d'associer à l'agent tensio-actif un agent co-tensio-actif.

Les agents co-tensio-actifs utilisables dans l'invention sont les alcools mono ou polyhydroxylés, les amines, les amino-alcools, les acides carboxyliques et les éthers mono ou polyfonctionnels, ces composés présentant une courte chaîne carbonée, ou bien un mélange de ceux-ci. La longueur de la chaîne carbonée contient en particulier de 1 à 20 atomes de carbone.

De préférence, on utilise comme agents co-tensio-actifs un mono-alcool tel que l'éthanol, le butanol, le pentanol, l'hexanol, l'heptanol, l'octanol, le décanol ou un mélange de ceux-ci. De façon avantageuse, on utilise le butanol, le pentanol ou l'hexanol.

Les alcools qui sont des liquides polaires peuvent jouer à la fois le rôle d'agent co-tensio-actif et celui de liquide polaire selon l'invention.

Conformément à l'invention, l'huile utilisée est un hydrocarbure cyclique, saturé ou insaturé ainsi que les dérivés fluorés de ces hydrocarbures. La chaîne carbonée de ces hydrocarbures contient de 5 à 30 atomes de carbone.

De préférence, on utilise comme hydrocarbure un alcane ou un dérivé aromatique. Par exemple on peut utiliser le benzène, le toluène, le cyclohexane, l'octane et le décane.

Les huiles, les agents tensio-actifs et co-tensio-actifs et éventuellement les particules ferromagnétiques citées précédemment, ainsi que l'eau sont des composés que l'on trouve facilement dans le commerce et à bas prix. Ceci permet la réalisation de dispositifs optiques à cristal liquide peu onéreux.

Les cristaux liquides selon l'invention sont parfaitement adaptés à l'affichage, aussi bien de type alphanumérique que matriciel, du fait qu'ils présentent une viscosité relativement faible. Leur viscosité est comprise entre 0,1 et 100 centipoises et de préférence comprise entre 1 et 30 centipoises.

Cette faible viscosité permet dans le cas d'une commande électrique ou magnétique d'orienter facilement les agrégats selon une direction voulue.

En outre, les cristaux liquides de l'invention présentent un bon effet mémoire, contrairement à un grand nombre de cristaux liquides connus, évitant ainsi de trop nombreux rafraîchissements du dispositif d'affichage. En effet, ces cristaux liquides restent longtemps orientés, même après suppression de l'excitation électrique ou magnétique.

Lors de l'utilisation des dispositifs selon l'invention à des températures inférieures à 0°C, il est possible d'ajouter au cristal liquide de l'anti-gel, tel que par exemple l'éthylène glycol ou bien de remplacer l'eau par du formaldéhyde.

Afin de favoriser la commande électrique ou magnétique des dispositifs optiques selon l'invention, il est possible d'ajouter au cristal liquide une molécule de préférence linéaire et/ou fortement chargée électriquement telle que les polypeptides, les polyélectrolytes et les polysaccharides. Ceci permet d'augmenter la biréfringence optique du cristal liquide ; plus le couplage entre la molécule ajoutée et les agrégats est grand, plus la biréfringence augmente.

Il est aussi possible d'ajouter aux cristaux liquides des molécules optiquement actives telles que de la brucine, du cholestérol ou leurs dérivés, afin que les cristaux liquides présentent une phase cholestérique.

Ces additifs représentent moins de 50% en poids du cristal liquide et de préférence moins de 10%.

En vue de simplifier les dispositifs optiques selon l'invention, commandables électriquement ou magnétiquement, par suppression de polariseurs croisés généralement utilisés de part et d'autre du film de cristal liquide, des colorants dichroïques peuvent être introduits dans le cristal liquide.

D'autres caractéristiques et avantages de l'invention ressortiront de la description qui va suivre, donnée à titre illustratif et non limitatif, en référence aux figures annexées, dans lesquelles :

- la figure 1 représente schématiquement et en perspective une serre selon l'invention,
- la figure 2 représente schématiquement en perspective l'un des panneaux de la serre de la figure 1, selon une première variante,
- les figures 3a et 3b représentent schématiquement l'un des panneaux de la serre de la figure 1, selon une seconde variante,
- la figure 4a représente schématiquement une première variante d'un dispositif d'affichage matriciel commandé thermiquement, conforme à l'invention,
- la figure 4b représente schématiquement une seconde variante d'un dispositif d'affichage matriciel commandé thermiquement, conforme à l'invention,

- la figure 5 représente schématiquement, en coupe longitudinale, un dispositif d'affichage matriciel commandé électriquement, selon l'invention,
- les figures 6a et 6b représentent schématiquement selon une pemière variante un dispositif d'affichage matriciel commandé magnétiquement, conforme à l'invention,
- la figure 7 représente schématiquement une seconde variante d'un dispositif d'affichage matriciel commandé magnétiquement, conforme à l'invention, et
- la figure 8 représente un diagramme de phases ternaire d'une composition de pentanol, de cyclohexane, d'eau et de bromure de tétradécyltriméthylammonium, à température ambiante.

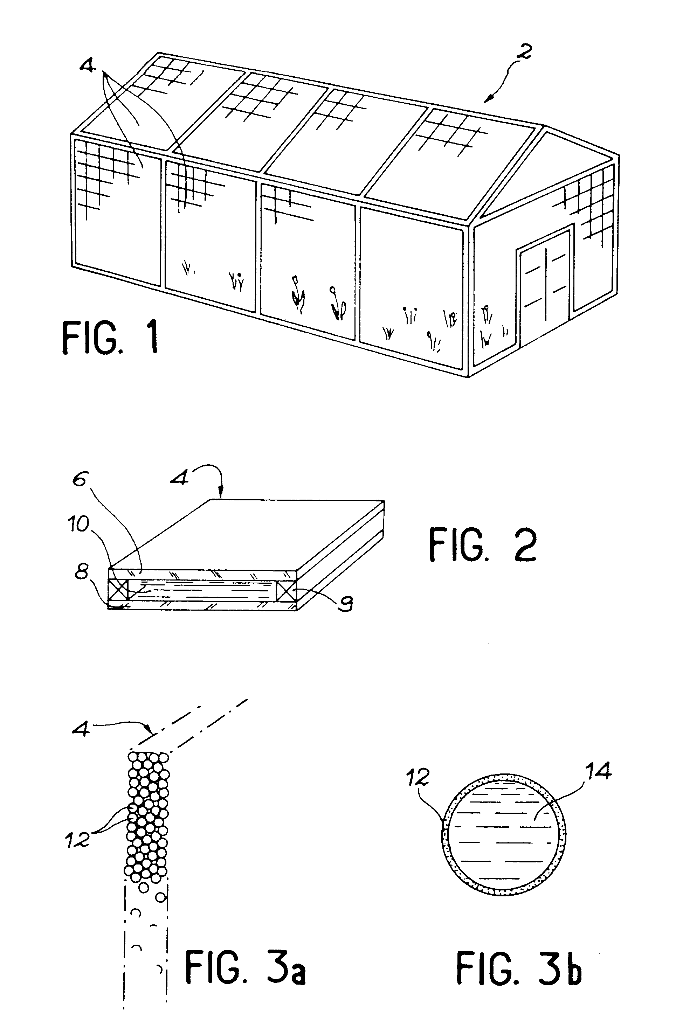

En référence aux figures 1 et 2, le dispositif optique selon l'invention peut être une serre de référence générale 2 formée d'une multitude de panneaux 4 fixés l'un à l'autre notamment par collage, chaque panneau pouvant être subdivisé en plusieurs cellules élémentaires. Chaque panneau ou cellule élémentaire est formé de deux parois 6 et 8 en verre ou en polyéthylène, maintenues écartées l'une de l'autre et rendues solidaires par leurs bords à l'aide d'un joint d'étanchéité 9.

L'espace défini entre les deux parois 6 et 8 est rempli d'un cristal liquide lyotrope 10 selon l'invention, du type commandable thermiquement. L'épaisseur du cristal liquide est de l'ordre du millimètre.

A la température ambiante, le cristal liquide 10 est transparent et la lumière solaire peut pénétrer à l'intérieur de la serre. La température dans la serre augmente alors, et par conséquent celle du cristal liquide le rendant alors opaque à la lumière solaire. L'inventeur suppose que le cristal liquide se présente alors sous la forme d'agrégats dont la longueur est de l'ordre de la longueur d'onde de la lumière, ce qui produit une diffusion de cette dernière.

Lorsque la température l'intérieur de la serre diminue, le cristal liquide redevient transparent permettant ainsi à la lumière solaire de pénétrer à nouveau dans la serre.

On obtient ainsi, et de façon très simple, une régulation thermique automatique de la température interne de la serre.

Au lieu d'avoir un film continu de cristal liquide intercalé entre deux parois en verre, on peut, comme représenté sur les figures 3a et 3b, réaliser les panneaux 4 de la serre sous forme de capsules ou de micro-capsules 12 en polyéthylène, solidaires les unes des autres, renfermant chacune du cristal liquide 14 tel que défini en référence aux figures 1 et 2.

Ces micro-capsules peuvent éventuellement être noyées dans un substrat transparent, notamment en verre.

L'utilisation de micro-capsules permet de réduire, voire d'éliminer le double vitrage des serres, permettant ainsi d'abaisser le coût de ces serres et d'éviter, en cas de casse d'un panneau, de voir tout le film de cristal liquide se répandre. Il en résulte une magnabilité supérieure à celle des plaques de verre.

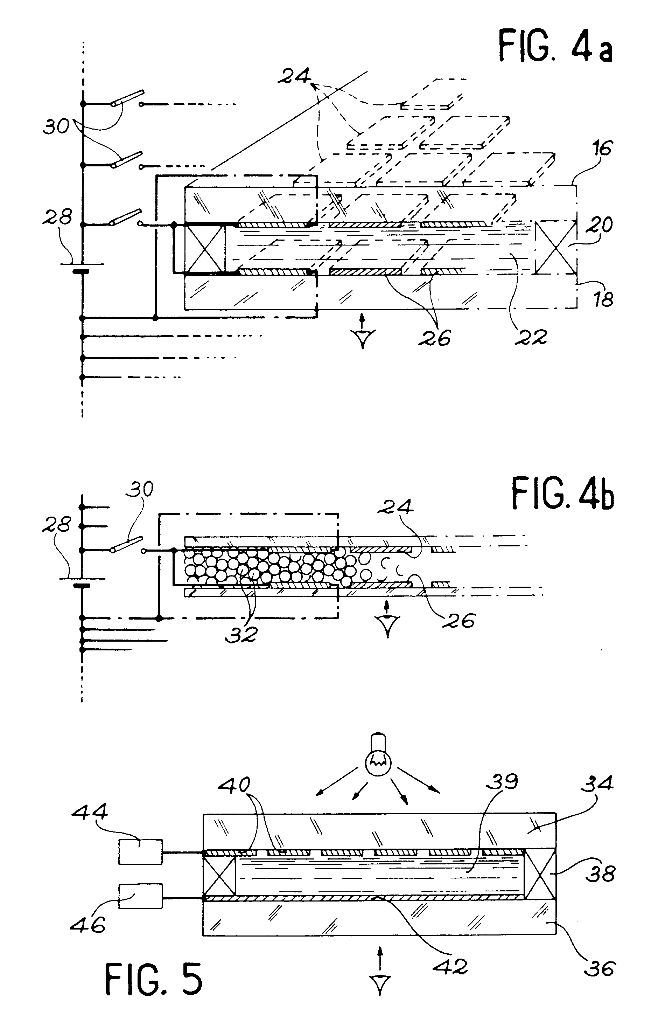

Le dispositif optique selon l'invention peut aussi consister en un dispositif d'affichage matriciel commandé thermiquement tel que représenté sur la figure 4a.

De façon simplifiée, ce dipositif, fonctionnant par transmission, comprend deux parois transparentes 16 et 18 par exemple en verre ou en plastique, soudées par leurs bords par un joint d'étanchéité 20 et définissant entre elles un espace rempli d'un cristal liquide lyotrope 22, tel que défini en référence aux figures 1 et 2.

Les faces internes des parois 16 et 18 du dispositif d'affichage sont pourvues respectivement de résistances chauffantes 24 et 26 transparentes réparties en matrice, chaque résistance chauffante 24 étant située en regard d'une résistance chauffante 26. Chaque couple de résistances 24 et 26, du type de celles utilisées dans les photocopieurs ou dans les imprimantes, définit un point image du dispositif d'affichage.

Chaque couple de résistances chauffantes 24 et 26 est relié aux bornes d'une source d'alimentation électrique 28. Un interrupteur 30 associé à chaque couple de résistances 24 et 26 permet l'alimentation ou non en courant de chaque couple de résistances chauffantes. L'alimentation en courant de chaque couple de résistances fait passer le cristal liquide en regard de ces résistances de l'état transparent à l'état opaque ou inversement de l'état opaque à l'état transparent.

La fermeture et l'ouverture des différents interrupteurs 30 peuvent être commandées automatiquement. En outre, le nombre de sources d'alimentation électrique 28 nécessaires pour l'alimentation en courant de l'ensemble des résistances chauffantes dépend du nombre de ces résistances et de l'intensité du courant délivré par les sources d'alimentation.

Le dispositif représenté sur la figure 4a peut être utilisé pour des afficheurs grand écran utilisés par exemple dans les gares ou les aéroports.

A la place d'un film continu de cristal liquide 22, il est possible d'utiliser, comme représenté sur la figure 4b, des micro-capsules 32 solidaires les unes des autres, renfermant chacune du cristal liquide (voir figure 3b par exemple).

Afin d'obtenir un affichage homogène, les micro-capsules 32 doivent être identiques et en particulier renfermer le même cristal liquide. Les autres parties du dispositif, par rapport à la figure 4a, sont inchangées.

Le dispositif optique selon l'invention peut aussi, comme représenté sur la figure 5, être un dispositif d'affichage matriciel commandé électriquement.

Ce dispositif comprend aussi deux parois isolantes, notamment en verre 34 et 36, maintenues écartées l'une de l'autre et soudées par leurs bords à l'aide d'un joint d'étanchéité 38. L'espace défini entre les parois 34 et 36 renferme un film de cristal liquide nématique lyotrope 39, selon l'invention, du type à commande électrique.

L'inventeur a constaté que les agrégats constituant le cristal liquide possèdent une anisotropie diélectrique donc que leur orientation est commandable par un champ électrique. Il suppose que lorsque les agrégats sont de taille réduite, cette orientation est commandable par un signal de faible amplitude.

A cet effet, la face interne de la paroi 34 est pourvue d'une électrode 40 transparente ($SnO_2$ par exemple) appropriée à l'affichage (segments, matrice de points) et la face interne de la paroi 36 d'une contre-électrode 42 aussi transparente ($SnO_2$ par exemple).

Des circuits de commande et d'alimentation connus 44 et 46, branchés respectivement à l'électrode 40 et à la contre-électrode 42 permettent d'appliquer à ces électrode et contre-électrode les signaux électriques d'excitation nécessaires à l'orientation des agrégats, selon une direction voulue et ponctuellement. Ces signaux peuvent être continus ou alternatifs.

Afin d'augmenter la biréfringence optique du cristal liquide 39, les agrégats peuvent renfermer des particules ferromagnétiques et en particulier des particules de magnétite. En outre, l'addition des colorants dichroïques permet un affichage en couleur.

A la place d'un film continu de cristal liquide 39, il est possible (voir figures 3a, 3b, 4b) d'utiliser des micro-capsules renfermant chacune un peu de cristal liquide, ces microcapsules étant éventuellement noyées dans un substrat solide.

L'orientation sélective des agrégats permet de passer de l'état biréfrigent à l'état isotrope ou homéotrope.

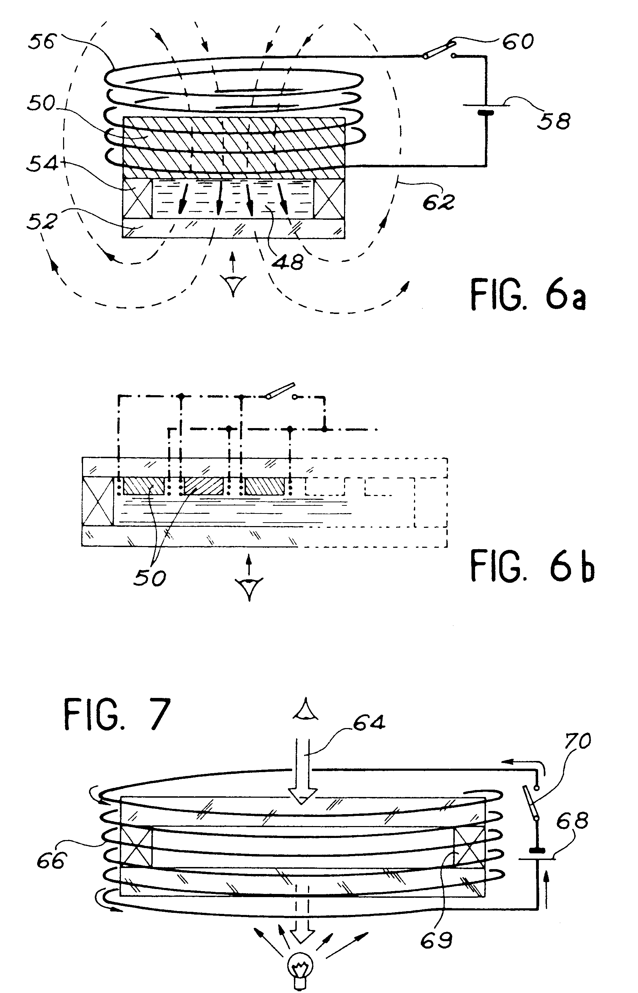

Le dispositif optique selon l'invention peut aussi, comme représenté sur les figures 6a et 6b, être un dispositif d'affichage matriciel commandé magnétiquement, ou plus exactement électromagnétiquement.

Ce dispositif comprend, pour chaque point image, un film de cristal liquide lyotrope nématique 48 selon l'invention, contenant des particules ferromagnétiques, intercalé entre une paroi mince 50 en fer doux et une paroi transparente 52, notamment en verre. Un joint 54 permet de rendre solidaires par leurs bords la couche en fer doux 50 et la paroi isolante 52.

Un bobinage 56 entoure la couche de fer doux 50 et est relié aux bornes d'une source d'alimentation électrique 58, via un interrupteur 60.

La fermeture de l'interrupteur 60 permet la création d'un champ magnétique à l'intérieur du film de cristal liquide 48 permettant d'orienter les agrégats selon ce champ. Les lignes de force du champ magnétique, représentées sur la figure 6a, portent la référence 62.

L'inventeur a en effet constaté que les agrégats présentent une anisotropie magnétique donc que leur orientation est commandable par un champ magnétique.

Compte tenu de la faible épaisseur du cristal liquide 48 (de l'ordre de 5 à 10 $\mu$m) les lignes de force magnétique, à l'intérieur de la cellule élémentaire étanche peuvent être considérées comme perpendiculaires au fer doux 50 et à la paroi 52 du dispositif d'affichage.

La figure 6b montre un dispositif complet d'affichage matriciel comportant plusieurs plots en fer doux 50 entourés chacun d'un bobinage 56, chaque plot 50 définissant un point image.

Compte tenu de l'opacité des plots en fer doux 50, ce dispositif d'affichage fonctionne par réflexion de la lumière sur ces plots en fer doux.

Il est aussi possible de réaliser chaque point image comme représenté sur la figure 7. Dans ce mode de réalisation, chaque plot en fer doux 50 constituant la paroi supérieure d'une cellule élémentaire à cristal liquide est remplacé par une paroi transparente en verre.

L'orientation des agrégats est obtenue en appliquant sur la cellule élémentaire un champ magnétique, symbolisé par la flèche 64, engendré à l'intérieur d'un solénoïde 66 dont les extrémités sont reliées aux bornes d'une source d'alimentation électrique 68 via un interrupteur 70.

L'observation de l'affichage se fait selon une direction confondue avec celle du champ magnétique.

Les différents dispositifs optiques décrits ci-dessus n'ont bien entendu été donnés qu'à titre illustratif, d'autres dispositifs à commande optique, électrique ou magnétique pouvant être envisagés sans pour autant sortir de cadre de l'invention.

Dans les dispositifs optiques selon l'invention commandés thermiquement (voir figures 1 à 4b), le cristal liquide doit être à la limite de la stabilité. On explique ci-après comment obtenir cette limite.

7

L'obtention d'un cristal liquide dépend de façon critique de la quantité d'agent co-tensio-actif. En effet, ce dernier est réparti entre le liquide polaire, l'huile et l'agent tensio-actif et le changement de température modifie cette répartition conduisant à une stabilisation ou déstabilisation de la phase cristal liquide. Un excès d'agent co-tensio-actif entraîne la destruction de la phase cristal liquide.

Lors de la déstabilisation du cristal liquide, la solution passe de l'état transparent (correspondant probablement à des agrégats de grande taille) à l'état opaque (correspondant probablement à des agrégats de taille voisine ou inférieure à la longueur d'onde de la lumière).

Un effet similaire est obtenu en utilisant un électrolyte dissous dans le liquide polaire.

Pour réaliser des cristaux liquides à la limite de la stabilité, on fixe tout d'abord la quantité d'agent tensio-actif puis on trace, à la température de fonctionnement choisie, la température ambiante par exemple, le diagramme de phases des trois autres constituants (huile, liquide polaire, agent co-tensio-actif). On détermine alors les limites de la phase cristal liquide et on prépare des compositions cristal liquide à proximité de ces limites.

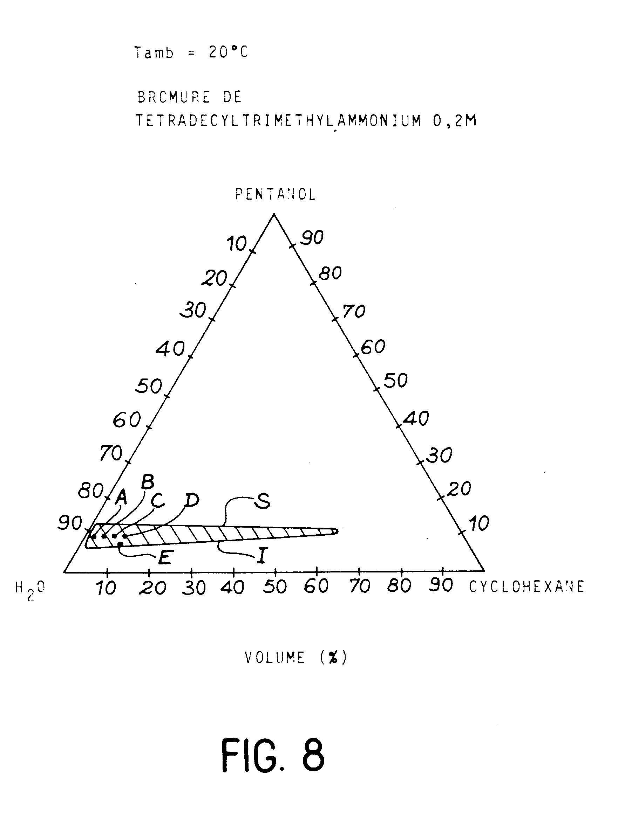

Sur la figure 8, on a représenté le diagramme de phases ternaire d'une micro-émulsion contenant du cyclohexane, du pentanol et d'une solution aqueuse de bromure de tétradécyltriméthylammonium 0,2M, à température ambiante.

Les points A, B, C, D situés en-dessous de la limite supérieure S de la phase cristal liquide correspondent à des compositions cristal liquide transparentes à température ambiante (20°C) et opaque à 45°C.

La composition au point A correspond à 2 ml d'une solution aqueuse de bromure de tétradécyltriméthylammonium 0,2M, auxquels on a ajouté 0,04 ml de cyclohexane et 0,22 ml de pentanol.

La composition au point B correspond à 2 ml d'une solution aqueuse de bromure de tétradécyltriméthylammonium 0,2M, auxquels on a ajouté 0,08 ml de cyclohexane et 0,154 ml de pentanol.

Le point C correspond à 2 ml d'une solution aqueuse de bromure de tétradécyltriméthylammonium 0,2M auxquels on a ajouté 0,12 ml de cyclohexane et 0,15 ml de pentanol.

Enfin, pour le point D, on a ajouté 0,20 ml de cyclohexane et 0,20 ml de pentanol à 2 ml d'une solution aqueuse 0,2M de bromure de tétradécyltriméthylammonium.

A titre de comparaison, on a préparé une composition cristal liquide contenant 2 ml d'une solution aqueuse de bromure de tétradécyltriméthylammonium 0,2M, 0,20 ml de cyclohexane et 0,15 ml de pentanol. Cette composition est représentée par le point E sur le diagramme de phases qui est proche de la limite inférieure I de la phase cristal liquide. Elle est opaque à température ambiante (20°C) et transparente à 5°C.

A titre illustratif, on donne ci-après plusieurs exemples de compositions lyotropes présentant les propriétés de cristal liquide et utilisables dans les dispositifs selon l'invention.

COMPOSITION N°1

| bromure de tétradécyltriméthylammonium | 0,145 g |
| pentanol | 0,165 ml |
| eau | 2,0 ml |
| cyclohexane | 0,1 ml |

Ce cristal liquide est transparent à température ambiante (20°C) et devient opaque en le chauffant à 36°C. Il peut être utilisé dans les dispositifs représentés dans les figures 1 à 4b.

COMPOSITION N°2

| bromure de tétradécyltriméthylammonium | 0,133 g |
| pentanol | 0,154 ml |
| cyclohexane | 0,08 ml |
| eau | 2 ml |

Ce cristal est transparent à température ambiante et devient opaque entre 32 et 42°C

A la température ambiante, il transmet 99% d'un faisceau lumineux et à 42°C, 3% seulement de la lumière incidente est transmise pour une couche d'un millimètre. Cet effet apparaît aussi bien dans le visible que dans l'infrarouge ou l'ultraviolet.

Ce cristal liquide peut être utilisé dans les dispositifs représentés aux figures 1 à 4b.

COMPOSITION N°3

| | |
|---|---|
| bromure de tétradécyltriméthylammonium | 0,133 g |
| pentanol | 0,30 ml |
| cyclohexane | 0,08 ml |
| eau | 2 ml |

Ce cristal liquide est transparent à température ambiante et devient opaque lorsqu'on élève la température entre 40 et 50°C. Il peut être utilisé dans les dispositifs représentés aux figures 1 à 4b.

COMPOSITION N°4

| | |
|---|---|
| bromure de tétradécyltriméthylammonium | 0,35 g |
| pentanol | 0,19 ml |
| eau | 1,2 ml |
| cyclohexane | 0,1 ml |

Ce composé est transparent à température ambiante (20°C) et devient opaque à une température de l'ordre de 25°C. Il peut être utilisé dans les dispositifs représentés aux figures 1 à 4b.

COMPOSITION N°5

| | |
|---|---|
| bromure de tétradécyltriméthylammonium | 0,58 g |
| pentanol | 0,65 ml |
| cyclohexane | 0,35 ml |
| eau | 8 ml |

Cette composition est transparente à température ambiante et devient opaque par un chauffage à une température de 40°C.

COMPOSITION N°6

| | |
|---|---|
| dodécyl sulfate de sodium | 0,56 g |
| pentanol | 1,1 ml |
| cyclohexane | 0,3 ml |
| eau | 5 ml |

Ce cristal liquide peut être utilisé dans les dispositifs représentés aux figures 1 à 4b.

COMPOSITION N°7

| oléate de potassium | 0,2 g |
|---|---|
| pentanol | 0,325 ml |
| cyclohexane | 0,2 ml |
| eau | 2 ml |

COMPOSITION N°8

| bromure de tétradécyltriméthylammonium | 0,3 g |
|---|---|
| pentanol | 0,5 ml |
| cyclohexane | 2 ml |
| eau | 0,02ml |

Ce cristal liquide présente une conductivité électrique faible. Il peut être utilisé dans le dispositif représenté sur la figure 5, commandé électriquement.

COMPOSITION N°9

| bromure de tétradécyltriméthylammonium | 2,1 g |
|---|---|
| butanol | 1 ml |
| octane | 7 ml |
| eau | 1 ml |

Ce cristal liquide présente une faible conductivité électrique ; il peut être utilisé dans les dispositifs à commande électrique tels que représentés sur la figure 5.

COMPOSITION N°10

| bromure de tétradécyltriméthylammonium | 0,35 g |
|---|---|
| pentanol | 0,19 ml |
| cyclohexane | 1,4 ml |
| eau | 0,6 ml |

Ce cristal liquide présente une conductivité électrique faible. Il peut être utilisé dans les dispositifs à commande électrique tels que représentés sur la figure 5.

COMPOSITION N°11

| bromure de tétradécyltriméthylammonium | 0,3 g |
|---|---|
| butanol | 0,1 ml |
| cyclohexane | 2 ml |
| eau | 0,1 ml |

Ce cristal liquide présente une faible conductivité électrique et une faible viscosité (de l'ordre 10 cp). Il peut être utilisé dans un dispositif à commande électrique tel que représenté sur la figure 5.

COMPOSITION N°12

| bromure de tétradécyltriméthylammonium | 0,15 g |
|---|---|
| butanol | 0,1 ml |
| cyclohexane | 2 ml |
| eau | 0,1 ml |

Ce cristal liquide présente une faible viscosité (de l'ordre 10 cp). Il peut être utilisé dans un dispositif optique commandé électriquement (figure 5 par exemple).

COMPOSITION N°13

| oléate de potassium | 0,32 g |
|---|---|
| pentanol | 0,14 ml |
| cyclohexane | 1,7 ml |
| eau | 0,26 ml |

Ce cristal liquide peut être utilisé dans un dispositif d'affichage tel que représenté sur la figure 5.

A titre d'exemple, on décrit ci-après l'obtention d'un cristal liquide renfermant dans ses agrégats des particules magnétiques. Ce cristal liquide peut être utilisé dans les dispositifs optiques commandés électriquement ou magnétiquement tels que représentés aux figures 5 à 7.

EXEMPLE

On forme une première solution par dissolution de 0,3 g de bromure de tétradécyltriméthylammonium (agent tensio-actif) dans 2 ml de cyclohexane (huile) et 0,05 ml de pentanol (agent co-tensio-actif). Au mélange obtenu on ajoute 0,2 ml d'une solution aqueuse de $FeCl_3$ 1,7 molaire. Le mélange est alors agité pendant quelques secondes jusqu'à ce que la phase aqueuse soit dispersée dans le cyclohexane.

Parallèlement, on prépare une seconde solution contenant les mêmes proportions de cyclohexane, de pentanol et de bromure de tétradécyltriméthylammonium à laquelle est ajouté 0,2ml d'une solution aqueuse de $FeCl_2$ 1,7 molaire à la place de la solution de $FeCl_3$.

Enfin, on prépare une troisième solution contenant 1,8g de bromure de tétradécyltriméthylammonium, 12 ml de cyclohexane, 0,3 ml de pentanol et 1,2 ml d'hydroxyde d'ammonium 12M.

Les trois solutions ci-dessus sont alors mélangées. La réaction chimique qui est complète après quelques minutes conduit à un cristal liquide ferromagnétique de couleur marron présentant des propriétés de biréfringence optique très supérieures à celles d'une composition similaire ne contenant pas de particules ferromagnétiques dans la phase dispersée, ici l'eau.

**Revendications**

1. Dispositif optique comportant un cristal liquide (10, 14, 22) présentant deux états optiques stables, un état transparent et un état opaque, que l'on peut commander, caractérisé en ce que le cristal liquide (10, 14, 22) a une structure lamellaire dans l'état transparent et une structure lamellaire nématique dans l'etat opaque, ces deux états étant commandables thermiquement, et en ce qu'il contient :
   - 5 à 20% en poids d'agent tensio-actif,
   - 0 à 20% en poids d'agent tensio-actif,
   - 2,6 à 94% en poids d'huile, et
   - 1 à 86,2% en poids de liquide polaire.
   le rapport masse d'agent co-tensio-actif sur masse d'agent tensio-actif étant inférieur à 2.

2. Dispositif optique selon la revendication 1, caractérisé en ce que le liquide polaire constitue la phase dispersée de la micro-émulsion et l'huile la phase continue.

3. Dispositif optique selon la revendication 1, caractérisé en ce que l'huile constitue la phase dispersée de la micro-émulsion et le liquide polaire la phase continue.

4. Dispositif optique comportant un cristal liquide (39, 48) présentant deux états stables que l'on peut commander, caractérisé en ce que le cristal liquide (39, 48) est un nématique contenant :
- 1 à 45% en poids d'agent tensio-actif,
- 1 à 45% en poids d'agent co-tensio-actif,
- 50 à 97% en poids d'huile,
- 1 à 48% en poids d'eau,

le rapport masse d'agent co-tensio-actif sur masse d'agent tensio-actif étant inférieur à 2, et tes quatre constituants formant des agrégats de forme allongée, dispersés dans une charge liquide continue constituée par l'huile, l'eau consistant la phase dispersée, la longueur des agrégats étant supérieure à la distance séparant deux agrégats consécutifs, l'orientation de ces agrégats étant commandable électriquement.

5. Dispositif optique selon la revendication 4, caractérisé en ce que le cristal liquide contient :
- 5 à 20% en poids d'agent tensio-actif,
- 1 à 20% en poids d'agent co-tensio-actif,
- 50 à 93% en poids d'huile, et
- 1 à 44% en poids d'eau.

6. Dispositif optique comportant un cristal liquide (39, 48) présentant deux états stables que l'on peut commander, caractérisé en ce que le cristal liquide (39, 48) est un nématique contenant :
- 1 à 45% en poids d'agent tensio-actif,
- 1 à 45% en poids d'agent co-tensio-actif,
- 50 à 97% en poids d'huile,
- 1 à 48% en poids de liquide polaire,

le rapport masse d'agent co-tensio-actif sur masse d'agent tensio-actif étant inférieur à 2, et les quatre constituants formant des agrégats de forme allongée, dispersés dans une phase liquide continue, dont la longueur est supérieure à la distance séparant deux agrégats consécutifs, ces derniers renfermant des particules ferromagnétiques, et leur orientation étant commandable magnétiquement.

7. Dispositif optique selon la revendication 6, caractérisé en ce que le cristal liquide contient :
- 5 à 20% en poids d'agent tensio-actif,
- 1 à 20% en poids d'agent co-tensio-actif,
- 50 à 93% en poids d'huile, et
- 1 à 44% en poids de liquide polaire.

8. Dispositif optique selon l'une quelconque des revendications 4 à 7, caractérisé en ce que la distance séparant deux agrégats consécutifs est comprise entre 7 et 300 nm.

9. Dispositif optique selon la revendication 6, caractérisé en ce que les particules ferromagnétiques sont des particules de magnétite ($Fe_3O_4$).

10. Dispositif optique selon l'une quelconque des revendications 6 à 9, caractérisé en ce que le liquide polaire constitue la phase dispersée et l'huile la phase continue.

11. Dispositif optique selon l'une quelconque des revendications 1 à 3, 6 et 7, caractérisé en ce que le liquide polaire est de l'eau.

12. Dispositif optique selon l'une quelconque des revendications 1 à 11, caractérisé en ce que le liquide polaire contient un électrolyte.

13. Dispositif optique selon la revendication 12, caractérisé en ce que l'électrolyte est choisi parmi un hydroxyde basique ou un sel inorganique.

14. Dispositif optique selon l'une quelconque des revendications 1 à 13, caractérisé en ce que l'huile est un hydrocarbure choisi parmi les hydrocarbures saturés, les hydrocarbures insaturés et les hydrocarbures cycliques.

15. Dispositif optique selon l'une quelconque des revendications 1 à 14, caractérisé en ce que l'huile est un hydrocarbure choisi parmi le benzène, le toluène, le cyclohexane, l'octane, le décane, un dérivé de ces hydrocarbures ou un mélange de ces hydrocarbures.

16. Dispositif optique selon l'une quelconque des revendications 1 à 15, caractérisé en ce que l'agent tensio-actif est choisi dans le groupe comprenant les sels d'acide gras à longue chaîne hydrocarbonée ou fluorocarbonée, les halogénures d'ammonium quaternaires et les alkyles sulfates ou sulfonates d'un métal alcalin.

17. Dispositif optique selon l'une quelconque des revendications 1 à 16, caractérisé en ce que l'agent tensio-actif est choisi parmi le bromure de tétradécyltriméthylammonium, le dodécyl sulfate de sodium et l'oléate de potassium.

18. Dispositif optique selon l'une quelconque des revendications 1 à 17, caractérisé en ce que l'agent co-tensio-actif est formé d'au moins un alcool.

19. Dispositif optique selon l'une quelconque des revendications 1 à 18, caractérisé en ce que l'agent co-tensio-actif est choisi parmi le butanol, le pentanol et l'hexanol.

20. Dispositif optique selon l'une quelconque des revendications 1 à 19, caractérisé en ce que le cristal liquide présente une viscosité allant de 0,1 à 100 centipoises.

21. Dispositif optique selon l'une quelconque des revendications 1 à 20, caractérisé en ce que le cristal liquide contient un anti-gel.

22. Dispositif optique selon l'une quelconque des revendications 1 à 21, caractérisé en ce que le cristal liquide contient des molécules optiquement actives.

23. Dispositif optique selon l'une quelconque des revendications 1 à 22, caractérisé en ce que le cristal liquide contient des colorants dichroïques.

24. Dispositif optique selon l'une quelconque des revendications 1 à 23, caractérisé en ce que le cristal liquide est logé à l'intérieur des capsules ou micro-capsules (12, 32).

25. Dispositif optique selon la revendication 1, 4 ou 6, caractérisé en ce que l'agent tensio-actif est le bromure de tétradécyltriméthylammonium, l'agent co-tensio-actif est le pentanol, l'huile est le cyclohexane et le liquide polaire est l'eau.

26. Dispositif optique selon l'une quelconque des revendications 1 à 3, caractérisé en ce que l'agent tensio-actif est le dodécyl sulfate de sodium, l'agent co-tensio-actif est le pentanol, l'huile est le cyclohexane et le liquide polaire est l'eau.

27. Dispositif optique selon la revendication 1, 4 ou 6, caractérisé en ce que l'agent tensio-actif est l'oléate de potassium, l'agent co-tensio-actif est le pentanol, l'huile est le cyclohexane et le liquide polaire est de l'eau.

28. Dispositif optique selon la revendication 4 ou 5, caractérisé en ce que l'agent tensio-actif est le bromure de tétradécyltriméthylammonium, l'agent co-tensio-actif est le butanol, l'huile est l'octane, et le liquide polaire est l'eau.

29. Dispositif optique selon la revendication 4 ou 5, caractérisé en ce que l'agent tensio-actif est le bromure de tétradécyltriméthylammonium, l'agent co-tensio-actif est le butanol, l'huile est le cyclohexane, et le liquide polaire est l'eau.

**Claims**

1. Optical device having a liquid crystal (10, 14, 22) which has two stable optical states, namely a transparent state and an opaque state which can be controlled, characterized in that the liquid crystal (10, 14, 22) has a lamellar structure in the transparent state and a nematic lamellar structure in the opaque state, said two states being thermally controllable and that it contains 5 to 20% by weight of a surfactant, 0 to 20% by weight of a co-surfactant, 2.6 to 94% by weight of oil and 1 to 86.2% by weight of polar liquid, the ratio of the co-surfactant mass to the surfactant mass being below 2.

2. Optical device according to claim 1, characterized in that the polar liquid constitutes the dispersed phase of the microemulsion and the oil the continuous phase.

3. Optical device according to claim 1, characterized in that the oil constitutes the dispersed phase of the microemulsion and the polar liquid the continuous phase.

4. Optical device having a liquid crystal (39, 48) with two stable states which can be controlled, characterized in that said liquid crystal (39, 48) is a nematic containing 1 to 45% by weight of surfactant, 1 to 45% by weight of co-surfactant, 50 to 97% by weight of oil and 1 to 48% by weight of water, the ratio of the co-surfactant mass to the surfactant mass being below 2 and the four constituents form elongated aggregates, dispersed in a continuous liquid phase constituted by oil, water constituting the dispersed phase, whose length exceeds that distance separating two consecutive aggregates, the orientation of these aggregates being electrically controllable.

5. Optical device according to claim 4, characterized in that it contains 5 to 20% by weight of surfactant, 1 to 20% by weight of co-surfactant, 50 to 93% by weight of oil and 1 to 44% by weight of water.

6. Optical device having a liquid crystal (39, 48) with two stable states which can be controlled, characterized in that the liquid crystal (39, 48) is a nematic containing 1 to 45% by weight of surfactant, 1 to 45% by weight of a co-surfactant, 50 to 97% by weight of oil and 1 to 48% by weight of polar liquid, the weight ratio of the co-surfactant to the surfactant being below 2, and the four constituents form elongated aggregates, dispersed in a continuous liquid phase, whose length exceeds the distance separating two consecutive aggregates, the latter containing ferromagnetic particles, and their orientation is magnetically controllable.

7. Optical device according to claim 6, characterized in that the liquid crystal contains 5 to 20% by weight of surfactant, 1 to 20% by weight of co-surfactant, 50 to 93% by weight of oil and 1 to 44% by weight of polar liquid.

8. Optical device according to any one of the claims 4 to 7, characterized in that the distance separating two consecutive aggregates is between 7 and 300 nm.

9. Optical device according to claim 6, characterized in that the ferromagnetic particles are magnetite particles ($Fe_3O_4$).

10. Optical device according to any one of the claims 6 to 9, characterized in that the polar liquid constitutes the dispersed phase and the oil constitutes the continues phase.

11. Optical device according to any one of the claims 1 to 3, 6 and 7, characterized in that the polar liquid is water.

12. Optical device according to any one of the claims 1 to 11, characterized in that the polar liquid contains an electrolyte.

13. Optical device according to claim 12, characterized in that the electrolyte is chosen from among a basic hydroxide or an inorganic salt.

14. Optical device according to any one of the claims 1 to 13, characterized in that the oil is a hydrocarbon chosen from among saturated hydrocarbons, unsaturated hydrocarbons and cyclic hydrocarbons.

15. Optical device according to any one of the claims 1 to 14, characterized in that the oil is a hydrocarbon chosen from among benzene, toluene, cyclohexane, octane, decane, a derivative of these hydrocarbons or a mixture of these hydrocarbons.

16. Optical device according to any one of the claims 1 to 15, characterized in that the surfactant is chosen

14

EP 0 271 375 B1

from the group including fatty acid salts with a long hydrocarbon or fluorocarbon chain, quaternary ammonium halides and alkyl sulphates or sulphonates of an alkali metal.

17. Optical device according to any one of the claims 1 to 16, characterized in that the surfactant is chosen from among tetradecyl trimethyl ammonium bromide, sodium dodecyl sulphate and potassium oleate.

18. Optical device according to any one of the claims 1 to 17, characterized in that the co-surfactant is formed by at least one alcohol.

19. Optical device according to any one of the claims 1 to 18, characterized in that the co-surfactant is chosen from among butanol, pentanol and hexanol.

20. Optical device according to any one of the claims 1 to 19, characterized in that the liquid crystal has a viscosity between 0.1 and 100 centipoises.

21. Optical device according to any one of the claims 1 to 20, characterized in that the liquid crystal contains an anti-freeze.

22. Optical device according to any one of the claims 1 to 21, characterized in that the liquid crystal contains optically active molecules.

23. Optical device according to any one of the claims 1 to 22, characterized in that the liquid crystal contains diochroic dyes.

24. Optical device according to any one of the claims 1 to 23, characterized in that the liquid crystal is located in capsules or microcapsules (12, 32).

25. Optical device according to claims 1, 4 or 6, characterized in that the surfactant is tetradecyl trimethyl ammonium bromide, the co-surfactant is pentanol, the oil is cyclohexane and the polar liquid is water.

26. Optical device according to any one of the claims 1 to 3, characterized in that the surfactant is sodium dodecyl sulphate, the co-surfactant is pentanol, the oil is cyclohexane and the polar liquid is water.

27. Optical device according to claims 1, 4 or 6, characterized in that the surfactant is potassium oleate, the co-surfactant is pentanol, the oil is cyclohexane and the polar liquid is water.

28. Optical device according to claims 4 or 5, characterized in that the surfactant is tetradecyl trimethyl ammonium bromide, the co-surfactant is butanol, the oil is octane and the polar liquid is water.

29. Optical device according to claims 4 or 5, characterized in that the surfactant is tetradecyl trimethyl ammonium bromide, the co-surfactant is butanol, the oil is cyclohexane and the polar liquid is water.

**Patentansprüche**

1. Optische Vorrichtung, enthaltend einen Flüssigkristall (10, 14, 22), welcher zwei stabile optische Zustände aufweist, einen lichtdurchlässigen Zustand und einen lichtundurchlässigen Zustand, welche man steuern kann, dadurch gekennzeichnet, daß der Flüssigkristall (10, 14, 22) eine lamellare Struktur im lichtdurchlässigen Zustand und eine lamellare nematische Struktur im lichtundurchlässigen Zustand besitzt, wobei diese beiden Zustände thermisch steuerbar sind und dadurch, daß er
   - 5 bis 20 Gew.-% oberflächenaktives Mittel,
   - 0 bis 20 Gew.-% Co-Tensid,
   - 2,6 bis 94 Gew.-% Öl und
   - 1 bis 86,2 Gew.-% polare Flüssigkeit enthält, wobei das Verhältnis der Masse des Co-Tensids zur Masse des oberflächenaktiven Mittels kleiner als 2 ist.

2. Optische Vorrichtung gemäß Anspruch 1, dadurch gekennzeichnet, daß die polare Flüssigkeit die dispergierte Phase der Mikroemulsion und das Öl die kontinuierliche Phase darstellt.

**3.** Optische Vorrichtung gemäß Anspruch 1, dadurch gekennzeichnet, daß das Öl die dispergierte Phase der Mikroemulsion und die polare Flüssigkeit die kontinuierliche Phase darstellt.

**4.** Optische Vorrichtung, enthaltend einen Flüssigkristall (39, 48), welcher zwei stabile optische Zustände aufweist, welche man steuern kann, dadurch gekennzeichnet, daß der Flüssigkristall (39, 48) nematisch ist und
- 1 bis 45 Gew.-% oberflächenaktives Mittel,
- 1 bis 45 Gew.-% Co-Tensid,
- 50 bis 97 Gew.-% Öl,
- 1 bis 48 Gew.-% Wasser enthalt, wobei das Verhältnis der Masse des Co-Tensids zur Masse des oberflächenaktiven Mittels kleiner als 2 ist und die vier Bestandteile Aggregate von gestreckter Gestalt bilden, welche in einer flüssigen, durch das Öl gebildeten kontinuierlichen Füllung dispergiert sind, wobei das Wasser die dispergierte Phase bildet und wobei die Länge der Aggregate größer ist als der Abstand, welcher zwei aufeinanderfolgende Aggregate trennt, wobei die Orientierung dieser Aggregate elektrisch steuerbar ist.

**5.** Optische Vorrichtung gemäß Anspruch 4, dadurch gekennzeichnet, daß der Flüssigkristall
- 5 bis 20 Gew.-% oberflächenaktives Mittel,
- 1 bis 20 Gew.-% Co-Tensid,
- 50 bis 93 Gew.-% Öl und
- 1 bis 44 Gew.-% Wasser enthält.

**6.** Optische Vorrichtung, enthaltend einen Flüssigkristall (39, 48), welcher zwei stabile Zustände aufweist, welche man steuern kann, dadurch gekennzeichnet, daß der Flüssigkristall (39, 48) nematisch ist und
- 1 bis 45 Gew.-% oberflächenaktives Mittel,
- 1 bis 45 Gew.-% Co-Tensid,
- 50 bis 97 Gew.-% Öl und
- 1 bis 48 Gew.-% polare Flüssigkeit enthält, wobei das
Verhältnis der Masse des Co-Tensids zur Masse des oberflächenaktiven Mittels kleiner als 2 ist und die vier Bestandteile Aggregate von gestreckter Gestalt bilden, welche in einer flüssigen kontinuierlichen Phase dispergiert sind und deren Länge größer ist als der Abstand, welcher zwei aufeinanderfolgende Aggregate trennt, wobei letztere ferromagnetische Teilchen enthalten und ihre Orientierung magnetisch steuerbar ist.

**7.** Optische Vorrichtung gemäß Anspruch 6, dadurch gekennzeichnet, daß der Flüssigkristall
- 5 bis 20 Gew.-% oberflächenaktives Mittel,
- 1 bis 20 Gew.-% Co-Tensid,
- 50 bis 93 Gew.-% Öl und
- 1 bis 44 Gew.-% polare Flüssigkeit enthält.

**8.** Optische Vorrichtung gemäß einem der Ansprüche 4 bis 7, dadurch gekennzeichnet, daß der Abstand, welcher zwei aufeinanderfolgende Aggregate trennt, zwischen 7 und 300 nm ist.

**9.** Optische Vorrichtung gemäß Anspruch 6, dadurch gekennzeichnet, daß die ferromagnetischen Teilchen Magnetit-Teilchen ($Fe_3O_4$) sind.

**10.** Optische Vorrichtung gemäß einem der Ansprüche 6 bis 9, dadurch gekennzeichnet, daß die polare Flüssigkeit die dispergierte Phase und das Öl die kontinuierliche Phase darstellt.

**11.** Optische Vorrichtung gemäß einem der Ansprüche 1 bis 3, 6 und 7, dadurch gekennzeichnet, daß die polare Flüssigkeit Wasser ist.

**12.** Optische Vorrichtung gemäß einem der Ansprüche 1 bis 11, dadurch gekennzeichnet, daß die polare Flüssigkeit einen Elektrolyt enthält.

**13.** Optische Vorrichtung gemäß Anspruch 12, dadurch gekennzeichnet, daß der Elektrolyt aus einem basischen Hydroxid oder einem anorganischen Salz ausgewählt ist.

**14.** Optische Vorrichtung gemäß einem der Ansprüche 1 bis 13, dadurch gekennzeichnet, daß das Öl ein aus den gesättigten Kohlenwasserstoffen, den ungesättigten Kohlenwasserstoffen und den cyclischen Kohlenwasserstoffen ausgewählter Kohlenwasserstoff ist.

**15.** Optische Vorrichtung gemäß einem der Ansprüche 1 bis 14, dadurch gekennzeichnet, daß das Öl ein aus Benzol, Toluol, Cyclohexan, Octan, Decan, einem Derivat dieser Kohlenwasserstoffe oder einem Gemisch dieser Kohlenwasserstoffe ausgewählter Xohlenwasserstoff ist.

**16.** Optische Vorrichtung gemäß einem der Ansprüche 1 bis 15, dadurch gekennzeichnet, daß das oberflächenaktive Mittel aus der die Fettsäuresalze mit langer Kohlenwasserstoff-oder Fluorkohlenwasserstoff-Kette, die quaternären Ammonium-halogenide und die Alkalimetall-alkylsulfate oder -sulfonate umfassenden Gruppe ausgewählt ist.

**17.** Optische Vorrichtung gemäß einem der Ansprüche 1 bis 16, dadurch gekennzeichnet, daß das oberflächenaktive Mittel aus Tetradecyltrimethylammoniumbromid, Natriumdodecylsulfat und Kaliumoleat ausgewählt ist.

**18.** Optische Vorrichtung gemäß einem der Ansprüche 1 bis 17, dadurch gekennzeichnet, daß das Co-Tensid aus wenigstens einem Alkohol gebildet ist.

**19.** Optische Vorrichtung gemäß einem der Ansprüche 1 bis 18, dadurch gekennzeichnet, daß das Co-Tensid aus Butanol, Pentanol und Hexanol ausgewahlt ist.

**20.** Optische Vorrichtung gemäß einem der Ansprüche 1 bis 19, dadurch gekennzeichnet, daß der Flüssigkristall eine von 0,1 bis 100 Centipoise reichende Viskosität aufweist.

**21.** Optische Vorrichtung gemäß einem der Ansprüche 1 bis 20, dadurch gekennzeichnet, daß der Flüssigkristall ein Antigel enthält.

**22.** Optische Vorrichtung gemäß einem der Ansprüche 1 bis 21, dadurch gekennzeichnet, daß der Flüssigkristall optisch aktive Moleküle enthält.

**23.** Optische Vorrichtung gemäß einem der Ansprüche 1 bis 22, dadurch gekennzeichnet, daß der Flüssigkristall dichroitische Farbstoffe Moleküle enthält.

**24.** Optische Vorrichtung gemäß einem der Ansprüche 1 bis 23, dadurch gekennzeichnet, daß der Flüssigkristall in das Innere von Kapseln oder Mikrokapseln (12, 32) eingelagert ist.

**25.** Optische Vorrichtung gemäß Anspruch 1, 4 oder 6, dadurch gekennzeichnet, daß das oberflächenaktive Mittel Tetradecyltrimethylammoniumbromid, das Co-Tensid Pentanol, das Öl Cyclohexan und die polare Flüssigkeit Wasser ist.

**26.** Optische Vorrichtung gemäß einem der Ansprüche 1 bis 3, dadurch gekennzeichnet, daß das oberflächenaktive Mittel Natriumdodecylsulfat, das Co-Tensid Pentanol, das Öl Cyclohexan und die polare Flüssigkeit Wasser ist.

**27.** Optische Vorrichtung gemäß Anspruch 1, 4 oder 6, dadurch gekennzeichnet, daß das oberflächenaktive Mittel Kaliumoleat, das Co-Tensid Pentanol, das Öl Cyclohexan und die polare Flüssigkeit Wasser ist.

**28.** Optische Vorrichtung gemäß Anspruch 4 oder 5, dadurch gekennzeichnet, daß das oberflächenaktive Mittel Tetradecyltrimethylanmoniumbromid,das Co-Tensid Butanol, das Öl Octan und die polare Flüssigkeit Wasser ist.

**29.** Optische Vorrichtung gemäß Anspruch 4 oder 5, dadurch gekennzeichnet, daß das oberflächenaktive Mittel Tetradecyltrimethylammoniumbromid,das Co-Tensid Butanol, das Öl Cyclohexan und die polare Flüssigkeit Wasser ist.

FIG. 1

FIG. 2

FIG. 3a

FIG. 3b

FIG. 4a

FIG. 4b

FIG. 5

56
50
54
52
60
58
62
48

FIG. 6a

50

FIG. 6b

FIG. 7
64
70
66
68
69

Tamb = 20°C

BROMURE DE
TETRADECYLTRIMETHYLAMMONIUM 0,2M

FIG. 8